# EUROPEAN PATENT APPLICATION

(11) **EP 3 434 939 A1**
(43) Date of publication of application: **30.01.2019**
(21) Application number: 17770202.4
(22) Date of filing: 21.03.2017
(51) Int. Cl.: F16J 9/06, F02F 5/00

(54) **COMBINED OIL CONTROL RING**

(30) Priority: 22.03.2016 JP 2016056701
(71) Applicant: Kabushiki Kaisha Riken, Tokyo 102-8202 (JP)
(72) Inventor: MOCHIZUKI Kazuya, Kashiwazaki-shi Niigata 945-8555 (JP)
(74) Representative: SSM Sandmair
(86) International application number: PCT/JP2017/011183
(87) International publication number: WO 2017/164160

(57) **Abstract**

To provide a combined oil control ring for an automobile engine which is capable of maintaining an outstanding oil control function without causing the occurrence of firm sticking between the spacer expander and the side rails even when the engine is operated over an extended period of time, the crest and the trough of the spacer expander are each provided with a seating tab for pressing an inner peripheral surface of the side rail, a projection for supporting the side rail, and a middle part between the seating tab and the projection, and a ratio (Sₘᵢₙ/S₀) is 1.9% or greater, where Smin is a minimum axial cross-sectional area of a space formed between the middle part and the side face of the side rail opposed thereto, and So is an axial cross-sectional area from a groove bottom of an oil ring groove of a piston, to which the combined oil control ring is attached, to an inner wall of a cylinder liner.

## Description

### Technical Field

The present invention relates to combined oil control rings to be attached to the pistons of the engine of an automobile, and particularly to a combined oil control ring which is configured from a pair of side rails and a spacer expander with crests and troughs formed in an axial waveform.

### Background Art

As the most critical task for modern society, measures directed toward the reduction of global environmental load are being actively taken. Among other things, reductions in carbon dioxide (CO₂) emissions and conservation of petroleum resources have been emphasized. In particular, for the automobile engine, what is more strongly demanded is the reduction in fuel consumption by cutting the size and weight thereof and reducing various types of losses. On the other hand, what is also increasingly strongly demanded is the request for purification of exhaust gases, so that the reduction in hazardous substances contained in the exhaust gases and the reduction in the consumption of lubricants are regarded as big problems to be tackled.

In the automobile engine, the lubricant may be heated when operated over an extended period of time and exposed to a blowby gas. This may lead to a state in which the lubricant contains a mixture of unburned substances of hydrocarbon or denatured products of oil additives (which is hereafter referred to collectively as "the oil sludge," wherein the oil sludge may also include a precursor of the oil sludge having a relatively low viscosity). The oil sludge that adheres to or is deposited on engine parts may wear the parts or block the passage of the lubricant, thereby causing a trouble to the function of the engine parts such as the combined oil control ring (hereafter to be referred to as "the oil ring" unless otherwise specified). When the worst happens in the oil ring, the spacer expander and the side rail may be firmly stuck to each other and inhibit the motion of the side rail, thereby compromising the full use of the oil control function.

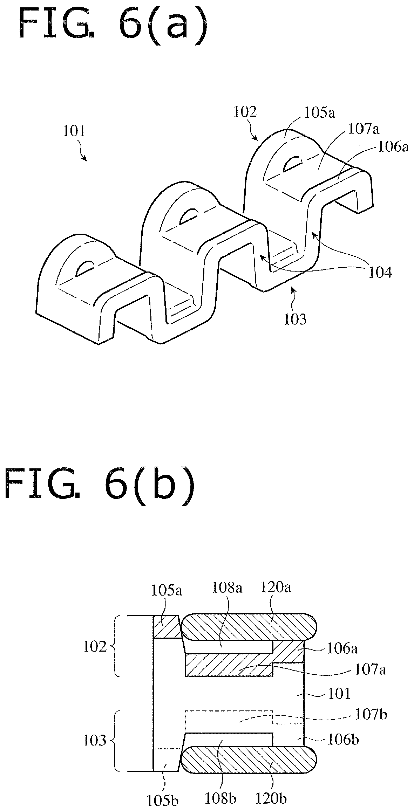

As shown in FIG. 6(b), a conventional oil ring is composed of a pair of annular side rails (120a, 120b) each having an abutment joint and a spacer expander (101) for supporting the side rails. Furthermore, as shown in FIG. 6(a), the spacer expander (101) is provided with crests (102) and troughs (103) formed in an axial waveform and legs (104) for connecting between the crests and the troughs. On the inner peripheral side of the crest and trough, a seating tab (105a, 105b) is formed; on the outer peripheral side, a projection (106a, 106b) for supporting the side rails is formed; and between the seating tab and the projection, a recessed middle part (107a, 107b) is formed. The spacer expander and the side rails are combined to form a gap-shaped space (108a, 108b) among the seating tab, the projection, the middle part, and the side rail.

When the angle of the seating tab (105a, 105b) of the spacer expander (101) causes the side rail (120a, 102b) to be pushed by the radial and axial components of force, the oil ring makes full use of the sealing function on the cylinder wall and the side face of the oil ring groove of the piston. In particular, since a narrow-width oil ring with an axial width size decreased has a good trackability to the cylinder wall and a side sealing function, it is possible to reduce frictional loss without increasing oil consumption even under a low tension. However, the oil ring may readily allow the oil sludge to be deposited in the space (108a, 108b) between the aforementioned spacer expander and the side rails; particularly in the case of the narrowed width, the deposited oil sludge may more possibly cause the side rail (120a, 120b) to be firmly stuck to the spacer expander (101). The occurrence of firm sticking would significantly reduce the trackability of the side rails to the cylinder wall, causing an abrupt increase in oil consumption.

Methods for preventing adhesion and deposition of the oil sludge to and on the oil ring, disclosed as conventional techniques, may include a method for coating the surface of the spacer expander and the side rails in order to prevent firm sticking and a method for designing the spacer expander so that the oil sludge is less prone to be deposited.

For example, a fluorine-based resin film and a resin film containing a fluorine-based resin are disclosed in Patent Literature 1 and Patent Literature 2; a film containing a fluoroalkyl group-substituted alkoxide is disclosed in Patent Literature 3; a hydrophilic film of a precursor polymer containing an inorganic polysilazane is disclosed in Patent Literature 4; and a method for coating a metal film having a low surface free energy and a low hydrogen bonding strength is disclosed in Patent Literature 5. These films are each a film having water and oil repellency or on the contrary, a hydrophilic film, and related to a method for preventing firm sticking that has been developed by focusing attention on the adhesion of the oil sludge.

On the other hand, as measures for the design of the oil ring, Patent Literature 6 teaches that from the viewpoint of circulating an oil having flown into the oil ring groove toward the crank case, the angle of the seating tab of the spacer expander is set to 10 to 20°, and the ratio 2X/Y is set to 0.04 to 0.15, where 2X is the total distance of the axial projection distance X of the projection for supporting each of the first and second side rails, and Y is the distance between the ends of both the seating tabs in the axial direction. Concerning the openings of a plurality of drain holes that communicate with the oil ring groove, it is also taught that more openings are formed on the thrust side of the piston rather than the anti-thrust side. Furthermore, Patent Literature 7 teaches that the aforementioned ratio 2X/Y is set to 0.13 to 0.25, and the ratio P/Y is set to 1.35 to 1.65, where P is the pitch between the projected portions (crests) or the recessed portions (troughs) of the spacer expander, and Y is the distance that is mentioned above. It is also taught that the ratio of the product of the combined nominal width (h1) and the combined radial thickness (a6) of the oil ring to the cross-sectional area of the space among the seating tab, the projection, the middle part, and the side rail is set to 12 to 71.

However, as described above, Patent Literature 6 sets the ratio 2X/Y to 0.04 to 0.15, whereas Patent Literature 7 sets the ratio to 0.13 to 0.25. In this manner, different ranges are required for each case, and thus not thought to be fully experimentally supported. Furthermore, in Patent Literature 6 and Patent Literature 7, no effects of other parameters have been considered.

### Citation List

### Patent Literature

Patent Literature 1: Japanese Patent Application Laid-Open No. 2002-310299
Patent Literature 2: Japanese Patent Application Laid-Open No. 2003-254155
Patent Literature 3: Japanese Patent Application Laid-Open No. 2000-027995
Patent Literature 4: Japanese Patent Application Laid-Open No. 2006-258110
Patent Literature 5: WO 2011/043364A1
Patent Literature 6: Japanese Patent No. 4633639
Patent Literature 7: Japanese Patent Application Laid-Open No. 2013-155829

### Summary of Invention

### Technical Problem

It is therefore an object of the present invention to provide a combined oil control ring for an automobile engine which is capable of maintaining an outstanding oil control function without causing the occurrence of firm sticking between the spacer expander and the side rails even when the engine is operated over an extended period of time.

### Summary of Invention

### Technical Problem

The inventors have made a close study of the situation in which an oil having flown into the oil ring groove of a piston to which the oil ring is attached is circulated back to an oil return hole that is formed on the inner diameter side of the oil ring groove. At this time, since the number of the oil return holes is significantly less than the number of the crests and troughs of the spacer expander, the numerical fluid analysis was conducted by focusing attention on the fact that the circumferential flow of oil is more critical than the radial flow of oil in the spacer expander. As a result, the inventors have found that the flow rate of the oil flowing through the gap among the seating tab, the projection, the middle part, and the side rail is closely related to the discharge of the oil sludge that is adhered to and deposited in the gap. Furthermore, such a combined oil control ring has been achieved which is capable of maintaining, in addition to a function of preventing firm sticking, an outstanding oil control function by designing the size of the oil control ring that can improve the trackability of the side rails.

### Solution to Problem

That is, a combined oil control ring of the present invention includes a pair of side rails and a spacer expander with crests and troughs formed in an axial waveform. The combined oil control ring is characterized in that the crest and the trough of the spacer expander are each provided with a seating tab for pressing an inner peripheral surface of the side rail, a projection for supporting the side rail, and a middle part between the seating tab and the projection, and a ratio (Sₘᵢₙ/S₀) is 1.9% or greater, where Sₘᵢₙ is a minimum axial cross-sectional area of a space formed between the middle part and the side face of the side rail opposed thereto, and S₀ is an axial cross-sectional area from a groove bottom of an oil ring groove of a piston, to which the combined oil control ring is attached, to an inner wall of a cylinder liner. The ratio (Sₘᵢₙ/S₀) is preferably 4.5% or less.

Furthermore, the seating tab has a seating tab height (a10) of preferably 28.9 to 34.2% of an expander radial thickness (a9) of the spacer expander.

Furthermore, the projection has a projection height (C) which is preferably 5.3 to 26.3% of the expander radial thickness (a9) of the spacer expander. The projection has a projection width (A) which is preferably 6.7 to 13.9% of an expander width (h9) of the spacer expander. The middle part has a height (B) which is preferably 39.5 to 55.3% of the expander radial thickness (a9) of the spacer expander, and the projection width (A) is preferably 0.12 to 0.25 mm.

Furthermore, the middle part opposed to the side rail is preferably tilted substantially in a circumferential direction, and the middle part is preferably convexed substantially in the circumferential direction.

### Advantageous Effects of Invention

The oil ring of the present invention is designed such that the ratio (Sₘᵢₙ/S₀) is 1.9% or greater, where Sₘᵢₙ is the minimum axial cross-sectional area of the space formed between the middle part of the spacer expander and the side face of the side rail opposed thereto, and So is the axial cross-sectional area from the groove bottom of the oil ring groove of the piston, to which the oil ring is attached, to the inner wall of the cylinder liner. An increase in the flow rate of the oil flowing through the space in this state causes the discharge of the oil sludge adhered to and deposited in the space to be abruptly improved, thereby enabling the prevention of firm sticking between the spacer expander and the side rail. Furthermore, designing the seating tab height (a10) of the seating tab of the spacer expander to be 28.9 to 34.2% of the expander radial thickness (a9) of the spacer expander allows the spacer expander to sit with stability, and a decrease in the radial thickness (a1) of the side rail provides a considerably improved trackability, so that oil consumption can be significantly reduced even in the case of a reduction in tension. It is also possible to flow out the oil with reliability by tilting the middle part substantially in the circumferential direction and forming the same in a convex shape.

### Brief Description of Drawings

FIG. 1 is a cross-sectional view illustrating an example of an oil ring of the present invention which is a combination of a pair of side rails and a spacer expander.
FIG. 2 is a cross-sectional view illustrating an oil ring groove of a piston inserted into a cylinder liner.
FIG. 3(a) is a perspective view illustrating part of another example of a spacer expander that constitutes the oil ring of the present invention.
FIG. 3(b) is a cross-sectional view illustrating an oil ring of the present invention which is a combination of the spacer expander of FIG. 3(a) and side rails.
FIG. 4(a) is a perspective view illustrating part of still another example of a spacer expander that constitutes an oil ring of the present invention.
FIG. 4(b) is a cross-sectional view illustrating an oil ring of the present invention which is a combination of the spacer expander of FIG. 4(a) and side rails.
FIG. 5(a) is a diagram showing the relation between Sₘᵢₙ/S₀ and an abutment joint gap ratio (m2/m1).
FIG. 5(b) is a diagram showing the relation between Sₘᵢₙ/S₀ and the amount of oil sludge adhesion.
FIG. 6(a) is a perspective view illustrating part of a conventional spacer expander.
FIG. 6(b) is a cross-sectional view illustrating a conventional oil ring.

### Description of Embodiments

A description will now be given of oil rings according to embodiments of the present invention with reference to the drawings.

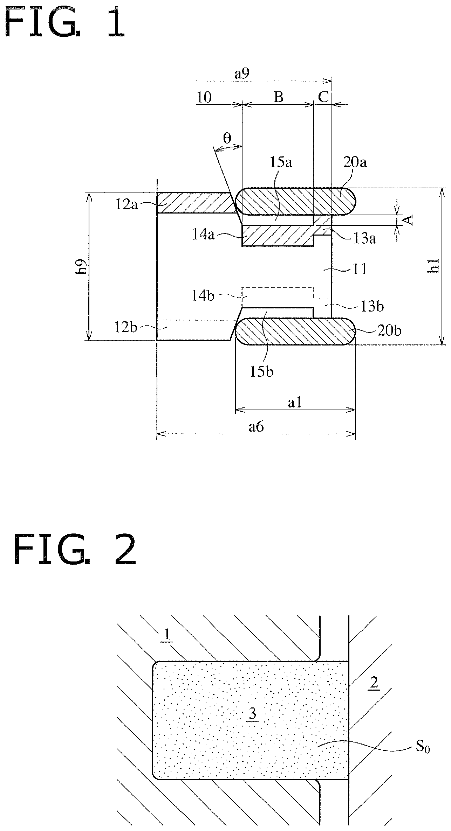

FIG. 1 shows an embodiment of an oil ring of the present invention. Like the conventional spacer expander, a spacer expander (11) is configured such that crests and troughs are each configured from a seating tab (12a, 12b), a projection (13a, 13b), and a middle part (14a, 14b), and there is formed a space (15a, 15b) between the middle part (14a, 14b) and the side face of a side rail (20a, 20b) opposed thereto. The axial cross-sectional area of the space (15a, 15b) (Sa, Sb, where Sa = Sb because the areas are vertically symmetric), and in particular, the minimum axial cross-sectional area (Sₘᵢₙ) affects the flow rate of oil flowing through the space (15a, 15b) and serves as a critical parameter in preventing firm sticking. As a result of experimental studies based on an axial cross-sectional area (S0) illustrated in FIG. 2 from the groove bottom of an oil ring groove to a cylinder liner inner wall, it was found that a ratio (Sₘᵢₙ/S₀) of 1.9% or greater allows the firm sticking between the side rail and the spacer expander to be avoided with reliability, but conversely, a ratio (Sₘᵢₙ/S₀) of less than 1.9% allows the firm sticking to be avoided with difficulty. The ratio (Sₘᵢₙ/S₀) may not be provided with a particular upper limit, but the ratio (Sₘᵢₙ/S₀) is preferably 4.5% or less.

Furthermore, the oil ring of the present invention is also preferably configured such that the trackability of the side rails is improved, and to reduce oil consumption, the width size (a1) of the side rails are relatively reduced. In that case, the corresponding spacer expander is preferably configured such that the seating tab height (a10) of the seating tab (12a, 12b) is 28.9 to 34.2% of the expander radial thickness (a9) of the spacer expander.

As described above, when an adjustment of the seating tab height (a10) leads to a decrease in the radial thickness (a1) of the side rail (20, 20), the angle θ of the seating tab (12a, 12b) is preferably adjusted from the viewpoints of the sealing function of the upper and lower surfaces of the oil ring groove, and in the case of the oil ring of the present invention, θ is preferably 10 to 30°, more preferably 15 to 25°.

Furthermore, to make the ratio (Sₘᵢₙ/S₀) 1.9% or greater, the oil ring of the present invention may be preferably configured such that the projection (13a, 13b) of the spacer expander is increased in the projection width (A), and the middle part (14a, 14b) is also increased in the middle part height (B). In that case, the projection height (C) of the associated projection (13a, 13b) is preferably 5.3 to 26.3% of the expander radial thickness (a9) of the spacer expander, more preferably 5.3 to 15.8%.

Furthermore, the projection (13a, 13b) of the spacer expander preferably has a projection width (A) of specifically 0.12 to 0.25 mm, more preferably 0.15 to 0.20 mm. Furthermore, the projection width (A) is preferably 6.7 to 13.9% of the expander width (h9) of the spacer expander, more preferably 8.3 to 11.5%.

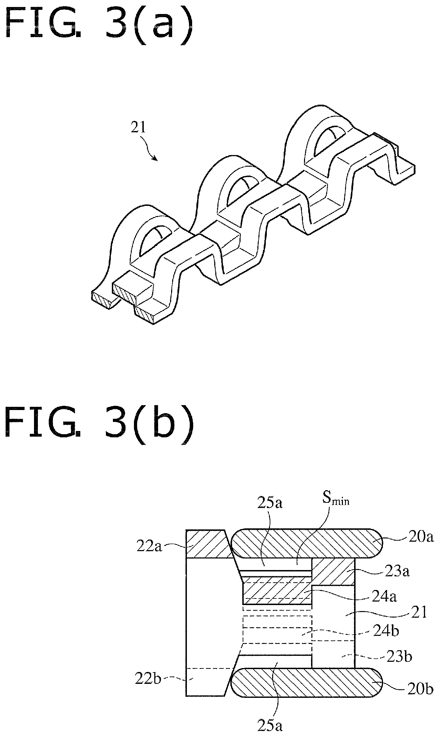

FIGs. 3(a) and 3(b) illustrate a spacer expander (21) according to another embodiment. The middle part (24a, 24b) is tilted substantially in the circumferential direction so as to allow the oil in the middle part to readily flow in one circumferential direction. The inclination angle of the adjacent middle parts may either plus (upward) or minus (downward) substantially in the circumferential direction, or may be repeatedly plus (upward) and minus (downward) in an alternate manner. Therefore, the minimum axial cross-sectional area (Sₘᵢₙ) of the space (25a, 25b) that is formed between the middle part (24a, 24b) and the side face of the opposed side rail (20a, 20b) is the axial cross-sectional area of an end portion of the space (25a, 25b).

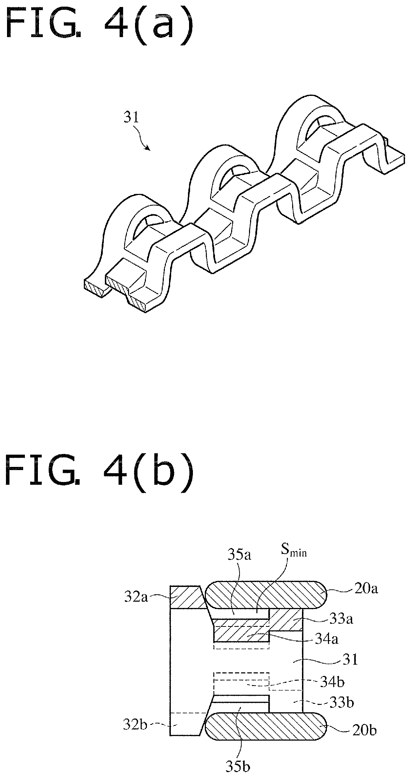

FIGs. 4(a) and 4(b) illustrate a spacer expander (31) according to still another embodiment. The middle part (35a, 35b) exhibits an inverse V-shaped and convexed substantially in the circumferential direction, allowing the oil in the middle part to readily flow in both circumferential directions. The axial cross-sectional area at the position corresponding to the convex-shaped top is the minimum axial cross-sectional area (Sₘᵢₙ) of the space (35a, 35b).

The aforementioned spacer expander may be formed by plastic working of wire material.

### [Examples]

### Examples 1 to 10 (E1 to E10) and Comparative Examples 1 to 4 (C1 to C4)

A combined oil ring was produced in which the spacer expander was formed of a rolled strip (SUS304) of 1.90 mm × 0.25 mm (whereas 1.60 mm × 0.25 mm for Comparative Example 1) using a forming method utilizing a gear, and the side rails were formed of a rolled strip (SUS440B) of 1.62 mm × 0.35 mm by coiling (whereas 1.72 mm × 0.35 mm for Examples 2 to 3, 5 to 6, and 8 to 10, and 1.37 mm × 0.35 mm for Comparative Example 1). The combined oil ring had a nominal diameter (d1) of 87 mm, a combined width (h1) of 2.0 mm, and a combined radial thickness (a6) of 2.2 mm (whereas 1.9 mm for Comparative Example 1). Here, the spacer expander had a crest (trough) to crest (trough) pitch of 2.7 mm, and a tab angle of 20° (whereas 25° for Comparative Example 1), and the middle part was a plane substantially parallel to the side face of the side rail. Note that with a tension value of 23 N employed as a target value, the developed length of the spacer expander was adjusted. For each of Examples 1 to 10 and Comparative Examples 1 to 4, the detailed sizes of the spacer expander are shown in Table 1, and the sizes of the width and radial thickness of the side rail are shown in Table 2.

**[Table 1]**

| | SPACER EXPANDER DIMENSIONS | | | | | |
|---|---|---|---|---|---|---|
| | OVERALL | | PROJECTION | | SEATING TAB | MIDDLE PART |
| | WIDTH h9, mm | HEIGHT a9, mm | WIDTH A, mm | HEIGHT C, mm | HEIGHT a10, mm | HEIGHT B, mm |
| E1 | 1.8 | 1.9 | 0.12 | 0.3 | 0.65 | 0.95 |
| E2 | 1.8 | 1.9 | 0.12 | 0.3 | 0.55 | 1.05 |
| E3 | 1.8 | 1.9 | 0.12 | 0.1 | 0.55 | 1.05 |
| E4 | 1.8 | 1.9 | 0.15 | 0.3 | 0.65 | 0.95 |
| E5 | 1.8 | 1.9 | 0.15 | 0.3 | 0.55 | 1.05 |
| E6 | 1.8 | 1.9 | 0.15 | 0.1 | 0.55 | 1.05 |
| E7 | 1.8 | 1.9 | 0.2 | 0.5 | 0.65 | 0.75 |
| E8 | 1.8 | 1.9 | 0.2 | 0.3 | 0.55 | 1.05 |
| E9 | 1.8 | 1.9 | 0.2 | 0.1 | 0.55 | 1.05 |
| E10 | 1.8 | 1.9 | 0.25 | 0.3 | 0.55 | 1.05 |
| C1 | 1.8 | 1.6 | 0.05 | 0.4 | 0.6 | 0.6 |
| C2 | 1.8 | 1.9 | 0.05 | 0.5 | 0.65 | 0.75 |
| C3 | 1.8 | 1.9 | 0.12 | 0.65 | 0.65 | 0.6 |
| C4 | 1.8 | 1.9 | 0.12 | 0.5 | 0.65 | 0.75 |

**[Table 2]**

| | SIDE RAIL DIMENSIONS | |
|---|---|---|
| | WIDTH mm | RADIAL THICKNESS a1, mm |
| E1 | 0.35 | 1.62 |
| E2 | 0.35 | 1.72 |
| E3 | 0.35 | 1.72 |
| E4 | 0.35 | 1.62 |
| E5 | 0.35 | 1.72 |
| E6 | 0.35 | 1.72 |
| E7 | 0.35 | 1.62 |
| E8 | 0.35 | 1.72 |
| E9 | 0.35 | 1.72 |
| E10 | 0.35 | 1.72 |
| C1 | 0.35 | 1.37 |
| C2 | 0.35 | 1.62 |
| C3 | 0.35 | 1.62 |
| C4 | 0.35 | 1.62 |

### [1] Engine Test

The combined oil rings according to Examples 1 to 4 were attached to No. 1 to No. 4 cylinders of a 2.4-liter four-cylinder engine. The test was conducted, using a degraded oil collected from the market as an engine oil, in a condition that a pattern operation was conducted for a predetermined time (predetermined number of cycles) in which continuously repeated are the operation condition from a stop state to the maximum output RPM and the oil water temperature condition from lower temperatures to higher temperatures. After a predetermined period of time elapsed, the evaluation method below was followed to measure the abutment joint gap of the side rail and measure the amount of oil sludge adhesion. Here, the top ring and the second ring used had the following specifications.

### (1) Top Ring

Material: SWOSC-V, the outer peripheral surface processed by nitride chromium ion plating
Sizes: d1 = 87.0 mm, h1 = 1.2 mm, a1 = 3.1 mm

### (2) Second Ring

Material: SWOSC-V, the outer peripheral surface processed by chrome plating
Sizes: d1 = 87.0 mm, h1 = 1.2 mm, a1 = 3.4 mm

For the combined oil rings according to Examples 5 to 10 and Comparative Example 1 to 4, engine tests were conducted using the 2.4-liter 4-cylinder engine mentioned above in the same manner as for a combination of Examples 1 to 4 on the combinations of Examples 5 to 8, Examples 9 to 10 and Comparative Examples 1 to 2, Comparative Examples 3 to 4 and Examples 1 to 2, Examples 3 to 6, Examples 7 to 10, and Comparative Examples 1 to 4. Therefore, the number of times of the tests was two times for each example and comparative example.

### [2] Measurement of side rail abutment joint gap

After the engine tests, the abutment joint gap (m2) of the upper and lower side rails of the oil ring was measured with the pistons taken away from the cylinders so as to determine the ratio (m2/m1) of the abutment joint gap (m2) to the abutment joint gap (m1) with the oil ring being attached to the piston before the engine test (which is equal to the abutment joint gap in a free state before the engine test). For each of the pair of side rails, m2/m1 was determined so as to compute the average value of the two engine tests.

### [3] Method for measuring the amount of oil sludge adhesion

After the engine test was ended, the oil rings were taken away from the pistons, dried at 200°C in an electric furnace for one hour, and cooled in a desiccator down to the room temperature; and subsequently, the mass of the oil rings was measured. The difference between the resulting mass and the mass of the oil ring measured in advance before the engine test was conducted, so that the average value of the two engine tests was determined as the amount of oil sludge adhesion.

The results of the engine tests according to Implementation Examples 1 to 10 and Comparative Examples 1 to 4 are shown in Table 3. Each test result is shown in relative values, e.g., the abutment joint gap is shown with the m2/m1 of Example 1 defined as 100, and the amount of oil sludge adhesion is shown with the amount of adhesion according to Example 1 defined as 100.

**[Table 3]**

| | ABUTMENT JOING GAP RATIO m2/m1 | RATIO OF AMOUNT OF OIL SLUDGE ADHESION |
|---|---|---|
| E1 | 100 | 100 |
| E2 | 117 | 83 |
| E3 | 124 | 81 |
| E4 | 100 | 101 |
| E5 | 126 | 82 |
| E6 | 120 | 83 |
| E7 | 101 | 107 |
| E8 | 113 | 84 |
| E9 | 108 | 101 |
| E10 | 104 | 103 |
| C1 | 27 | 359 |
| C2 | 40 | 255 |
| C3 | 53 | 203 |
| C4 | 58 | 169 |

As can be seen from Table 3, the abutment joint gap ratio (m2/m1) after the engine test is 100 to 126 for Examples 1 to 10 while being reduced to 27 to 58 for Comparative Examples 1 to 4, and the amount of oil sludge adhesion is 81 to 107 for Examples 1 to 10 while being increased to 169 to 359 for Comparative Examples 1 to 4. That is, it is considered that for Comparative Examples 1 to 4, the constraint of the side rail due to the deposition of oil sludge caused the abutment joint to be returned (expanded) to the original state with difficulty even when the piston was drawn out of the cylinder, whereas for Examples 1 to 10, a reduction in adhesion/deposition of oil sludge led to a reduction of the degree of constraint of the oil ring, thereby allowing the abutment joint to be returned (expanded) to the original state with ease.

To consider the aforementioned evaluation results, Table 4 shows the minimum axial cross-sectional area (Sₘᵢₙ) of the space formed between the middle part determined by each size of the spacer expander and the side face of the side rail opposed thereto, the axial cross-sectional area (S₀) from the groove bottom of the oil ring groove of the piston to the inner wall of the cylinder liner, the ratio (Sₘᵢₙ/S₀), the ratio (a10/a9) of the seating tab height (a10) to the expander radial thickness (a9), the ratio (C/a9) of the projection height (C) to the expander radial thickness (a9), the ratio (A/a9) of the projection width (A) to the expander radial thickness (a9), and the ratio (B/a9) of the middle part height (B) to the expander radial thickness (a9).

**[Table 4]**

| | PARAMETERS OF SPACER EXPANDER | | | | | | |
|---|---|---|---|---|---|---|---|
| | Sₘᵢₙ mm² | S₀ mm² | Sₘᵢₙ/S₀ % | a10/a9 % | C/a9 % | A/h9 % | B/a9 % |
| E1 | 0.119 | 6.2 | 1.9 | 34.2 | 15.8 | 6.7 | 50.0 |
| E2 | 0.131 | 6.2 | 2.1 | 28.9 | 15.8 | 6.7 | 55.3 |
| E3 | 0.155 | 6.2 | 2.5 | 28.9 | 5.3 | 6.7 | 55.3 |
| E4 | 0.149 | 6.2 | 2.4 | 34.2 | 15.8 | 8.3 | 50.0 |
| E5 | 0.164 | 6.2 | 2.6 | 28.9 | 15.8 | 8.3 | 55.3 |
| E6 | 0.194 | 6.2 | 3.1 | 28.9 | 5.3 | 8.3 | 55.3 |
| E7 | 0.160 | 6.2 | 2.6 | 34.2 | 26.3 | 11.1 | 39.5 |
| E8 | 0.220 | 6.2 | 3.5 | 28.9 | 15.8 | 11.1 | 55.3 |
| E9 | 0.260 | 6.2 | 4.2 | 28.9 | 5.3 | 11.1 | 55.3 |
| E10 | 0.277 | 6.2 | 4.5 | 28.9 | 15.8 | 13.9 | 55.3 |
| C1 | 0.033 | 6.2 | 0.5 | 37.5 | 25.0 | 2.8 | 37.5 |
| C2 | 0.041 | 6.2 | 0.7 | 34.2 | 26.3 | 2.8 | 29.5 |
| C3 | 0.074 | 6.2 | 1.2 | 34.2 | 34.2 | 6.7 | 31.6 |
| C4 | 0.095 | 6.2 | 1.5 | 34.2 | 26.3 | 6.7 | 39.5 |

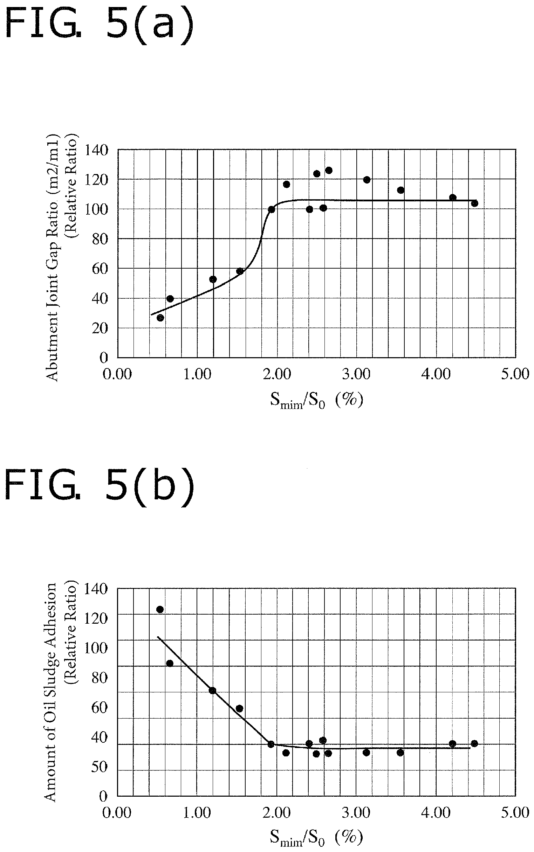

FIG. 5(a) shows the relation between Sₘᵢₙ/S₀ and the abutment joint gap ratio (m2/m1), while FIG. 5(b) shows the relation between Sₘᵢₙ/S₀ and the ratio of the amount of oil sludge adhesion. It can be seen that the abutment joint gap ratio (m2/m1) abruptly increases for Sₘᵢₙ/S₀ from 1.5% to 1.9%, and for 1.9% or greater, the constraint of the side rail occurs with difficulty. On the other hand, it can be seen that since the amount of oil sludge adhesion is monotonously reduced for Sₘᵢₙ/S₀ up to 1.9% and not changed for 1.9% or greater, the adhesion/deposition of oil sludge is inhibited for Sₘᵢₙ/S₀ of 1.9% or greater.

### Example 11 (E11)

A combined oil ring was produced in the same manner as that in Example 1 except that the spacer expander with the middle part that was tilted substantially in the circumferential direction as shown in FIGs. 3(a) and 3(b). The projection width A1 of one end of the projection in the circumferential direction was 0.12 mm and the projection width A2 of the other end was 0.15 mm. Therefore, Sₘᵢₙ is the same as that of Example 1.

### Example 12 (E12)

A combined oil ring was produced in the same manner as that in Example 1 except that the spacer expander with the middle part that was convexed substantially in the circumferential direction as shown in FIGs. 4(a) and 4(b). The projection width A3 at the center of the projection in the circumferential direction was 0.12 mm, and the projection width A4 at both ends in the circumferential direction was 0.15 mm. Therefore, Sₘᵢₙ is the same as that of Example 1.

The same engine test as that for Example 1 was also conducted for Example 11 (E11) and Example 12 (E12). Here, the combined oil ring according to Example 11 was attached to No. 1 cylinder and No. 3 cylinder of the 2.4-liter 4-cylinder engine, and the combined oil ring according to Example 12 was attached to No. 2 cylinder and No. 4 cylinder. The test results are shown in Table 5.

**[Table 5]**

| | ABUTMENT JOINT GAP RATIO m2/m1 | RATIO OF AMOUNT OF OIL SLUDGE ADHESION |
|---|---|---|
| E11 | 110 | 87 |
| E12 | 114 | 83 |

### Reference Signs List

0
1 piston
2 cylinder
3 piston ring groove
11, 21, 31, 101 spacer expander
12a, 12b, 22a, 22b, 32a, 32b, 105a, 105b seating tab
13a, 13b, 23a, 23b, 33a, 33b, 106a, 106b projection
14a, 14b, 24a, 24b, 34a, 34b, 107a, 107b middle part
15a, 15b, 25a, 25b, 35a, 35b, 108a, 108b space
20a, 20b, 120a, 120b side rail
a1 radial thickness of side rail
a6 combined radial thickness of combined oil ring
a9 expander radial thickness of spacer expander
a10 seating tab height of spacer expander
h1 combined width of combined oil ring
h9 expander width of spacer expander
A projection width of spacer expander
B middle part height of spacer expander
C projection height of spacer expander
θ tab angle of spacer expander
Sₘᵢₙ minimum axial cross-sectional area of space
S₀ axial cross-sectional area of oil ring groove to cylinder liner inner wall in axial direction
m1 abutment joint gap of side rail before engine test
m2 abutment joint gap of side rail after engine test

## Claims

1. A combined oil control ring comprising a pair of side rails and a spacer expander with crests and troughs formed in an axial waveform, wherein the crest and the trough of the spacer expander are each provided with a seating tab for pressing an inner peripheral surface of the side rail, a projection for supporting the side rail, and a middle part between the seating tab and the projection, and a ratio (Sₘᵢₙ/S₀) is 1.9% or greater, where Sₘᵢₙ is a minimum axial cross-sectional area of a space formed between the middle part and the side face of the side rail opposed thereto, and So is an axial cross-sectional area from a groove bottom of an oil ring groove of a piston, to which the combined oil control ring is attached, to an inner wall of a cylinder liner.

2. The combined oil control ring according to claim 1, wherein the ratio (Sₘᵢₙ/S₀) is 4.5% or less.

3. The combined oil control ring according to claim 1 or 2, wherein the seating tab has a seating tab height (a10) which is 28.9 to 34.2% of an expander radial thickness (a9) of the spacer expander.

4. The combined oil control ring according to any one of claims 1 to 3, wherein the projection has a projection height (C) which is 5.3 to 26.3% of an expander radial thickness (a9) of the spacer expander.

5. The combined oil control ring according to any one of claims 1 to 4, wherein the projection has a projection width (A) which is 6.7 to 13.9% of an expander width (h9) of the spacer expander.

6. The combined oil control ring according to any one of claims 1 to 5, wherein the middle part has a height (B) which is 39.5 to 55.3% of an expander radial thickness (a9) of the spacer expander.

7. The combined oil control ring according to any one of claims 1 to 6, wherein a projection width (A) of the projection is 0.12 to 0.25 mm.

8. The combined oil control ring according to any one of claims 1 to 7, wherein the middle part opposed to the side rail is tilted substantially in a circumferential direction.

9. The combined oil control ring according to claim 8, wherein the middle part opposed to the side rail is convexed substantially in the circumferential direction.
